# EUROPEAN PATENT APPLICATION

(11) **EP 4 667 126 A1**
(43) Date of publication of application: **24.12.2025**
(21) Application number: 25182332.4
(22) Date of filing: 12.06.2025
(51) Int. Cl.: B09B 3/30, B03B 9/06, B29B 17/02, C22B 1/00, C22B 7/00, C22B 13/00, C22B 3/00, H01M 6/52, H01M 10/06, H01M 10/54, B09B 101/16

(54) **SPENT AND/OR DECOMMISSIONED LEAD-ACID ACCUMULATOR TREATMENT PLANT AND PROCESS**

(30) Priority: 20.06.2024 IT 202400014176
(71) Applicant: Engitec Technologies S.p.A., 20026 Novate Milanese MI (IT)
(72) Inventor: PIZZOCRI, Guido, 20025 Legnano (MI) (IT)
(74) Representative: Riccardi, Elisa

(57) **Abstract**

A spent and/or decommissioned lead-acid accumulator treatment plant (80), comprising: a grinder device (14) configured to receive a plurality of spent and/or decommissioned lead-acid accumulators (12); and a plurality of separator devices (18; 82, 86); wherein a first one (82) of said separator devices (18; 82, 86) is configured to extract lead pastel (84); and wherein a second one (86) of said separator devices (18; 82, 86) is arranged upstream of said first one (82) of said separator devices (18; 82, 86) and comprises a settler (88) and an elutriator (90) configured to be inputted the output fraction (92) settled in the settler (88) and to extract therefrom a lead-based metal fraction (20, 22; 94).

A corresponding process.

## Description

The present invention relates to a spent and/or decommissioned lead-acid accumulator treatment plant and process, in particular in order to recover reusable materials as secondary raw materials and/or to optimally dispose of non-reusable, waste materials.

Lead-acid accumulators are still widely used also in view of their low cost, for example in the automotive industry, in industrial handling machines, in agricultural machinery, to allow the starting of the heat engine and to power all on-board electric utilities.

At the end of their useful lifetime, as in the case of production waste or accumulators that are not (or no longer) usable for other reasons, lead-aid accumulators are subjected to recycling processes to recover the constituent materials of the various components thereof, in particular lead and electrolyte, besides other valuable materials, and to allow an optimized disposal of the non-recoverable materials.

In the present description and in the attached claims:
- unless otherwise specified, when reference is made to lead-acid accumulators, it is understood that such accumulators are spent and/or decommissioned and substantially electrically discharged;
- term "accumulator" is sometimes used as an abbreviation for "lead-acid accumulator";
- under adjective "homogeneous", a material is meant to be indicated, which comprises one single chemical element or chemical compound or a plurality of chemical elements or chemical compounds having physical-chemical characteristics sufficiently similar to be able to be used as a secondary raw material, after any specific treatment, or possibly to be disposed of as waste;
- under expression "heterogeneous material" or "heterogeneous fraction", a non-homogeneous material or fraction is meant to be indicated;
- verb "comprise" is used in a non-exhaustive meaning, so that in the subject of the verb, besides the element or element list being its direct object, also one or more other elements may be comprised;
- expression "and/or" is sometimes replaced by the sole slash ("j") between the two terms to be considered jointly or as an alternative;
- expressions "downstream" and "upstream" are meant as referred to the main flow direction of the material being treated in the plant, and therewith it is meant to encompass that between a device upstream or respectively downstream from another one, one or more further devices may be included, unless otherwise specified;
- terms "hydrodynamic separator" and "hydro-separator" are used as synonyms;
- under expression "water", acid water, in particular acidified by acids of accumulator electrolyte, and/or process water, is meant to be encompassed;
- expressions "upper threshold" and "lower threshold" are used to indicate two thresholds, one larger than the other, and thus respectively a "high threshold" and a "low threshold", each of which may represent a maximum boundary or a minimum boundary, according to the context.

The main materials that make up lead-acid accumulators are:
- contact components, among which the grids, forming the supporting structure of the electrodes of the individual accumulator cells, the poles for connection to the utilities, and the bridges or "posts", electrically interconnecting the grids of adjacent cells; these components are made of metallic lead alloyed with other elements, typically lead-calcium (Pb-Ca) for the grids or lead-antimony (Pb-Sb) for poles and posts;
- the active mass coating the grids, typically lead oxide (PbO), lead dioxide (PbO2), pure lead (Pb);
- the electrolyte, typically a solution of sulfuric acid (H2SO4) in distilled water, which may be in liquid form in traditional accumulators, in gelled form in other accumulator types, or in absorbed form in a glass fiber mat in AGM (acronym for Absorbent Glass Mat) accumulators, which also serves as a separator between electrodes;

- the separators (membranes) interposed between the positive and negative grids of adjacent cells; these components are typically made of silica loaded polyethylene terephthalate (PET) and/or of fabric materials (gauntlet) and/or by the glass fiber mat in the case of AGM accumulators;
- the cell container or casing and the related cover; these components are typically made of polypropylene (PP) or acrylonitrile butadiene-styrene (ABS);
- fastening components, typically made of iron or ferrous material and/or ferromagnetic material.

Spent or decommissioned lead-acid accumulators treatment generally comprises grinding them, and separating the ground material into fractions as homogeneous as possible, if not even extracting individual materials with a purity degree as high as possible. This with the aim, as already mentioned, of recovering the reusable materials as secondary raw materials and/or of optimally disposing of the non-reusable materials as waste.

As far as lead is concerned, this is typically recovered, as far as the aforementioned contact components are concerned, as (lead-based) metal fractions, possibly separated based on the particle size, as well as, as far as the active mass is concerned, in the form of "pastel", namely a mixture containing lead and its derivatives, in particular oxides and sulphates, which may range from a powdery form to a pasty form.

Other fractions that are separated in the spent or decommissioned lead-acid accumulator treatment typically comprise an electrolyte fraction and one or more polymer fractions, possibly separated into light plastics, floating in the material being treated, and heavy plastics, sinking in the material being treated.

For both economic and environmental reasons, as well as of compliance with certain regulations, the quantity and quality of reusable materials that are separately collected in the lead-acid accumulator recovery process should be maximized.

The technical problem at the basis of the invention is to provide a plant, as well as a process, for treating spent/decommissioned lead-acid accumulators which is more efficient in terms of quantity and quality of the secondary raw materials which may be separately collected.

The invention relates, in an aspect thereof, to a spent and/or decommissioned lead-acid accumulator treatment plant, comprising:
a grinder device configured to receive a plurality of spent and/or decommissioned lead-acid accumulators and to output a ground heterogeneous material, wherein said plurality of lead-acid accumulators comprises accumulators of the Absorbent Glass Mat, AGM, type and/or accumulators with fabric separators,
a plurality of separator devices, each separator device being configured to receive a respective input heterogeneous material and to extract therefrom at least two respective output fractions, each output fraction being homogeneous or less heterogeneous than the input heterogeneous material, wherein said input heterogeneous material is said ground heterogeneous material or is one of the output fractions of another one of said separator devices,
wherein at least one of said separator devices comprises a sieve,
wherein said plant comprises a water pressurizing device and an injector device configured to selectively supply a pressurized water flow against an output face of the sieve.

The Applicant has perceived that "counter-current" washing the sieve (with respect to the flow of material under separation through the sieve) achieves the detachment of the glass wool fibers and/or the textile fibers, originating from the ground separators, from its mesh wall, fibers which would otherwise clog the sieve up - thus making the treatment of lead-acid accumulators of the AGM type and/or with fabric separators possible in a same plant provided for treatment of accumulators with plastics separators, even the simultaneous treatment of two of these, or all three different, accumulator types, and thus making their separate collection or a separation operation before introduction into the plant superfluous.

In this way, the continued operation of the or the various separator(s) comprising a respective sieve is also made possible, and thus the continued operation of the entire plant, without the need (or with a reduced need) of plant shutdown to clean the sieve(s).

Said plurality of spent and/or decommissioned lead-acid accumulators may further comprise accumulators with plastics separators.

The injection direction of the pressurized water flow may be comprised between a direction orthogonal to the output face of the sieve and a direction tangent to the output face of the sieve, said extreme directions being meant to be included in the possible injection directions.

The pressure of the pressurized water is preferably higher than 100 bar.

The pressurized water may be process water originating from the mains and/or water recirculated within the plant, preferably it is water recirculated within the plant.

Said at least one separator device comprising a sieve may be selected from the group consisting of: a pastel separator; a separator of pastel and a lead-based metal fraction derived from contact components; a separator of plastics floating in the material under separation; a separator of plastics sinking in the material under separation.

The plant may further comprise a device for supplying at least one flocculant material at or in the proximity of said at least one separator device comprising the sieve.

Said at least one flocculant material may be supplied directly into the separator device comprising the sieve and/or into the flow of material immediately upstream of the separator device comprising the sieve and/or into a device upstream of the separator device comprising the sieve and/or into the flow of material immediately downstream of the separator device comprising the sieve and/or into a device downstream of the separator device comprising the sieve.

The flocculant material allows the fibers to aggregate into floccules, which by virtue of their greater weight may sink and be collected, as precipitate or sediment, in the same separator device comprising the sieve or in a device downstream thereof.

Said at least one flocculant material may comprise an anionic flocculant material and a cationic flocculant material.

By providing for those two flocculant materials, the advantage is obtained that with the cationic flocculant, the (glass and/or textile) fibers are ionized; the fact that the fibers are ionized allows the anionic flocculant material to be more effective in making them aggregate into floccules.

Said at least one separator device comprising a sieve, or a second separator device downstream of said at least one separator device comprising a sieve, may be a separator of a lead material, wherein floccules formed through said flocculant material are collected in the output fraction comprising lead material.

The Applicant has recognized that the presence of silica in the glass fibers of separators of accumulators of the AGM type brings advantages in the metallurgical process for treating lead material because it favours scorification. The Applicant has also recognized that the presence of textile fibers of accumulators with fabric separators brings advantages in the metallurgical process for treating lead material because it provides a nonpolluting energy contribution. The combined provision of backwashing the sieves and addition of at least one flocculant material, in particular of a cationic and an anionic flocculant, has accordingly the further advantage of enriching a lead output fraction with fibers useful for its following treatment, fibers which, by instead performing washing of the sieve off-line, would be dispersed in the rinsing water.

In particular, when said at least one flocculant material comprises a cationic flocculant material and an anionic flocculant material, the cationic flocculant material may be supplied into a device upstream of the separator device comprising the sieve and/or into the flow of material immediately upstream of the separator device comprising the sieve and/or directly into the separator device comprising the sieve; and the anionic flocculant material may be supplied directly into the separator device comprising the sieve and/or into the flow of material immediately downstream of the separator device comprising the sieve and/or into a device downstream of the separator device comprising the sieve.

The invention relates, in an aspect thereof, to a process for treating spent and/or decommissioned lead-acid accumulators, comprising:
grinding a plurality of spent and/or decommissioned lead-acid accumulators, to output a ground heterogeneous material, wherein said plurality of lead-acid accumulators comprises accumulators of the Absorbent Glass Mat, AGM, type and/or accumulators with fabric separators,
separating said ground heterogeneous material into a plurality of output fractions, each output fraction being homogeneous or less heterogeneous than the ground heterogeneous material, wherein said separating comprises at least one sieving of a flow of material through a sieve, and
selectively supplying a pressurized water flow against an output face of the sieve.

The invention relates, in an aspect thereof, to a spent and/or decommissioned lead-acid accumulator treatment plant, comprising:
a grinder device configured to receive a plurality of spent and/or decommissioned lead-acid accumulators and to output a ground heterogeneous material,
a plurality of separator devices, each separator device being configured to receive a respective input heterogeneous material and to extract therefrom at least two respective output fractions, each output fraction being homogeneous or less heterogeneous than the input heterogeneous material, wherein said input heterogeneous material is said ground heterogeneous material or is one of the output fractions of another one of said separator devices,
wherein said plant comprises an air pressurizing device and at least one diffuser configured to diffuse compressed air generated by the air pressurizing device onto at least one of said output fractions of said at least one of said separator devices.

The Applicant has perceived that, through diffusion of compressed air onto the flows of material that is gradually separated from the spent/decommissioned accumulator meal (specifically the fractions representing secondary raw material or possibly waste), it is advantageously possible, though using liquid phase separation techniques, to noticeably reduce the residual moisture of such material, avoiding possible contamination by acid water. Moreover, with such a provision, the following metallurgical treatment in a furnace is made faster, therefore less expensive and sustainable (in particular, as far as the lead-based metal fractions derived from contact components and the lead pastel are concerned).

Said at least one of said separator devices may be selected from the group consisting of: a plastics separator; a separator of a lead-based metal fraction derived from contact components; a lead pastel separator.

The plant may further comprise a screw type conveyor device downstream of said at least one of said separator devices, and the means for diffusing compressed air may comprise at least one diffuser at the screw type conveyor device.

In this case, said at least one separator device may be selected from the group consisting of a plastics separator device and an elutriator device.

The plastics separator device may be selected from the group consisting of a sink-float device, a hydrodynamic separator and a sieve.

Alternatively, the diffuser may be provided internally of said at least one separator device.

In this case, said at least one separator device may be selected from the group consisting of a pastel separator device and a separator device of lead pastel and a lead-based metal fraction derived from contact components.

The pastel separator device may be a filter press.

The separator device of lead pastel and a lead-based metal fraction derived from contact components may be a multi-stage rotary sieve.

The invention relates, in an aspect thereof, to a process for treating spent and/or decommissioned lead-acid accumulators, comprising:
grinding a plurality of spent and/or decommissioned lead-acid accumulators, to output a ground heterogeneous material,
separating said ground heterogeneous material into a plurality of output fractions, each output fraction being homogeneous or less heterogeneous than the ground heterogeneous material,
diffusing compressed air onto at least one of said output fractions.

The invention relates, in an aspect thereof, to a spent and/or decommissioned lead-acid accumulator treatment plant, comprising:
a grinder device configured to receive a plurality of spent and/or decommissioned lead-acid accumulators and to output a ground heterogeneous material,
a plurality of separator devices, each separator device being configured to receive a respective input heterogeneous material and to extract therefrom at least two respective output fractions, each output fraction being homogeneous or less heterogeneous than the input heterogeneous material, wherein said input heterogeneous material is said ground heterogeneous material or is one of the output fractions of another one of said separator devices,
wherein a first one of said separator devices is configured to extract pastel as one of said respective output fractions,
wherein a second one of said separator devices is arranged upstream of said first one of said separator devices and comprises a settler and an elutriator configured to be inputted the output fraction settled in the settler and to extract therefrom a lead-based metal fraction as one of said output fractions of said second one of said separator devices.

The first separator device may be immediately downstream of the second separator device and receive, as input heterogeneous material, an output fraction of the second separator device, but this is not strictly necessary.

The Applicant has perceived that the combination of an elutriator downstream of a settler, arranged upstream of a pastel separator, advantageously achieves extraction of lead or lead alloy metal residue, derived from contact components of the accumulators, which has not been separated by preceding separator devices. In particular, it is possible to separate very fine particles, highly valuable because free of sulphates and other impurities conversely present in the active mass, particles which usually are not separately extracted, rather flow into the pastel which, because of the aforementioned sulphate and impurities, is a material having a lower metallurgic yield and therefore less valuable.

The lead-based metal fraction may be derived from contact components of the lead-acid accumulators.

The particle size of the lead-based metal fraction may be smaller than a lower preset threshold.

The lower preset threshold is comprised between 0.5 and 4 mm, preferably between 1 and 3 mm, even more preferably is 2 mm.

A third one of said plurality of separator devices may be configured to extract, as one of said respective output fractions, a second lead-based metal fraction, wherein particles of the second lead-based metal fraction have a size larger than a particle size of said lead-based metal fraction.

The second lead-based metal fraction may be derived from contact components of the lead-acid accumulators.

Said third one of said plurality of separator devices may be arranged upstream of said second one of said separator devices.

The particle size of the second lead-based metal fraction may be larger than an upper preset threshold, larger than a or respectively the lower preset threshold of the particle size of said lead-based metal fraction.

It is understood that in practice, the second lead-based metal fraction may also comprise a neglectable amount of particles having size smaller than the upper preset threshold.

The upper preset threshold may be comprised between 6 and 16 mm, preferably between 8 and 12 mm, even more preferably is 10 mm.

In case said upper threshold is provided for, a fourth one of said plurality of separator devices may be configured to extract, as one of said respective output fractions, a third lead-based metal fraction, wherein particles of the third lead-based metal fraction have a size comprised between the lower preset threshold and the upper preset threshold.

It is understood that in practice, the third lead-based metal fraction may also comprise a neglectable amount of particles having a size smaller than the lower preset threshold.

The third lead-based metal fraction may be derived from contact components of the lead-acid accumulators.

Said fourth one of said plurality of separator devices may be arranged upstream of said second one of said separator devices.

By providing for the fourth separator upstream of the aforementioned combination of settler and elutriator, a very high purity and therefore quality of the very fine lead powders separated by the elutriator is achieved.

Said plurality of separator devices my further comprise at least one of: a separator of plastics floating in the liquid material being treated; a separator of plastics sinking in the liquid material being treated; an electrolyte separator; a further pastel separator.

The invention relates, in an aspect thereof, to a process for treating spent and/or decommissioned lead-acid accumulators, comprising:
grinding a plurality of spent and/or decommissioned lead-acid accumulators, to output a ground heterogeneous material,
separating said ground heterogeneous material into a plurality of output fractions, each output fraction being homogeneous or less heterogeneous than the ground heterogeneous material,
wherein said separating comprises:
   separating pastel,
   letting one of said output fractions less heterogeneous than the ground heterogeneous material settle and
   elutriating the settled material to separate therefrom a lead-based metal fraction.

The invention relates, in an aspect thereof, to a spent and/or decommissioned lead-acid accumulator treatment plant, comprising:
a grinder device configured to receive a plurality of spent and/or decommissioned lead-acid accumulators and to output a ground heterogeneous material,
a plurality of separator devices, each separator device being configured to receive a respective input heterogeneous material and to extract therefrom at least two respective output fractions, each output fraction being homogeneous or less heterogeneous than the input heterogeneous material, wherein said input heterogeneous material is said ground heterogeneous material or is one of the output fractions of another one of said separator devices,
wherein said plurality of separator devices comprises:
   a sink-float device, one of the respective output fractions comprising plastics floating in the material under separation,
   a rotary sieve device, the respective input heterogeneous material being the other output fraction of the sink-float device, one of the respective output fractions being a lead-based metal fraction,
   a hydrodynamic separator, the respective input heterogeneous material being another output fraction of the rotary sieve device, one of the respective output fractions being a heterogeneous fraction comprising sinking plastics.

The Applicant has perceived that using a rotary sieve device downstream of a sink-float device allows the lead-based metal fraction to be extracted from the treated material, allowing proper function of the hydrodynamic separator, provided further downstream (namely, downstream of the rotary sieve device) and configured to extract a heterogeneous fraction comprising sinking plastics (e.g. derived from the PET separators), because it prevents those metal particles from reaching the hydrodynamic separator, where they would weigh down the sinking plastics too much, preventing an effective separation thereof, for example by ascent.

The hydrodynamic separator may be configured to extract the heterogeneous fraction comprising sinking plastics through an ascending stream.

The lead-based metal fraction may be derived from contact components of the lead-acid accumulators.

Particles of said lead-based metal fraction may have a size smaller than or equal to an upper preset threshold and predominantly higher than or equal to a lower preset threshold.

Said lead-based metal fraction may thus comprise particles having a size comprised between a lower preset threshold and an upper preset threshold, and a neglectable amount of particles having a size smaller than the lower preset threshold.

The lower preset threshold may be comprised between 0.5 and 4 mm, preferably between 1 and 3 mm, even more preferably is 2 mm.

The upper preset threshold may be comprised between 6 and 16 mm, preferably between 8 and 12 mm, even more preferably is 10 mm.

Another output fraction of the hydrodynamic separator may also comprise plastics floating in the material under separation.

Alternatively or additionally, another output fraction of the hydrodynamic separator may be a second lead-based metal fraction.

The second lead-based metal fraction may be derived from contact components of the accumulators.

Particles of said second lead-based metal fraction may have a size larger than the upper preset threshold.

It is understood that, in practice, the second lead-based metal fraction may also comprise a neglectable amount of particles having a size smaller than the upper present threshold.

Said plurality of separator devices may further comprise a separator device of plastics sinking in the material under separation, which input material is said heterogeneous fraction comprising sinking plastics.

Said plurality of separator devices may further comprise at least one of: a separator device of pastel, a separator device of electrolyte, a separator device of a third lead-based metal fraction.

The third lead-based metal fraction may be derived from contact components of the accumulators.

Particles of said third lead-based metal fraction may have a size smaller than the lower preset threshold ("very fine particles").

The pastel separator device, where provided for, may be arranged upstream of the sink-float device.

The electrolyte separator device, where provided for, may be arranged upstream of the sink-float device.

The separator device of the third lead-based metal fraction, where provided for, may be arranged downstream of the hydrodynamic separator.

The invention relates, in an aspect thereof, to a process for treating spent and/or decommissioned lead-acid accumulators, comprising:
grinding a plurality of spent and/or decommissioned lead-acid accumulators, to output a ground heterogeneous material,
separating said ground heterogeneous material into a plurality of output fractions, each output fraction being homogeneous or less heterogeneous than the ground heterogeneous material,
wherein said separating comprises, sequentially:
   separating through sinking-floating, wherein through floating, plastics floating in the material under separation are separated,
   separating, through a rotary sieve, a lead-based metal fraction,
   hydrodynamically separating a heterogeneous fraction comprising sinking plastics.

The plant according to one or more of the above-mentioned aspects may further comprise a separator device of non-lead-acid accumulators, arranged upstream of the grinder.

Alternatively or additionally, the plant according to one or more of the above-mentioned aspects may further comprise a separator device of decommissioned ferrous/ferromagnetic metals, arranged upstream of the grinder.

Alternatively or additionally, the plant according to one or more of the above-mentioned aspects may further comprise at least one further grinder configured to grind an output fraction of a separator of said plurality of separators before supplying it as input heterogeneous material to another separator of said plurality of separators.

The plant according to one or more of the above-mentioned aspects may be configured to treat batches of spent and/or decommissioned lead-acid accumulators or to treat a continuous flow of such accumulators.

In the process of one or more of the above-mentioned aspects, separation may occur by successive separations.

Alternatively or additionally, in the process of one or more of the above-mentioned aspects, at least one further grinding may be provided during separation.

Two or more of the features of the various aspects described above may be combined with each other, and advantageously a plant according to the invention comprises the features of at least two of the aspects described above, and preferably of all the aspects described above.

For example, it is possible to provide for the diffusion of compressed air of the second aspect at the output of a sieve type separator device onto which a flow of pressurized water is supplied, according to the first aspect.

For example, it is possible to provide for the diffusion of compressed air of the second aspect at the output of the elutriator of the third aspect and/or at the output of the sink-float device and/or internally of the rotary sieve device of the fourth aspect. In all of these cases, a pressurized water flow may further be supplied onto the sieve type components, according to the first aspect.

For example, it is possible to supply, according to the first aspect, a pressurized water flow onto a sieve of the sink-float device and/or onto the rotary sieve of the fourth aspect, as well as it is possible to supply such a pressurized water flow onto sieve type separator devices also in association with use of a settler and an elutriator as in the third aspect. In all of these cases, it is possible to provide for the diffusion of compressed air of the second aspect at the output of the elutriator of the third aspect and/or at the output of the sink-float device and/or internally of the rotary sieve device of the fourth aspect.

For example, it is possible to provide, in a same plant, for a plurality of separator devices configured according to the third aspect and configured according to the fourth aspect. Also in all these cases, it is possible to provide for the diffusion of compressed air of the second aspect at the output of the elutriator of the third aspect and/or at the output of the sink-float device and/or internally of the rotary sieve device of the fourth aspect. In all of the above-mentioned cases, it is further possible to supply a pressurized water flow onto one of the sieve type separator devices, according to the first aspect, alternatively or additionally to the diffusion of compressed air of the second aspect.

Preferred features of the plant and process of the invention are set forth in the dependent claims.

Further features and advantages of the present invention will be more clearly apparent from the following detailed description of some preferred embodiment thereof, made with reference to the attached drawings, wherein:
- FIG. 1 shows a general diagram of a spent and/or decommissioned lead-acid accumulator treatment plant;
- FIGs. 2-7 and FIG. 8 split into FIGs. 8A, 8B show, each, a diagram of a spent and/or decommissioned lead-acid accumulator treatment plant according to the subject-matter disclosed herein,
- FIG. 9 is a reduced version of the plant of FIG. 8, in which areas of the plant diagram according to FIG. 7 are highlighted.

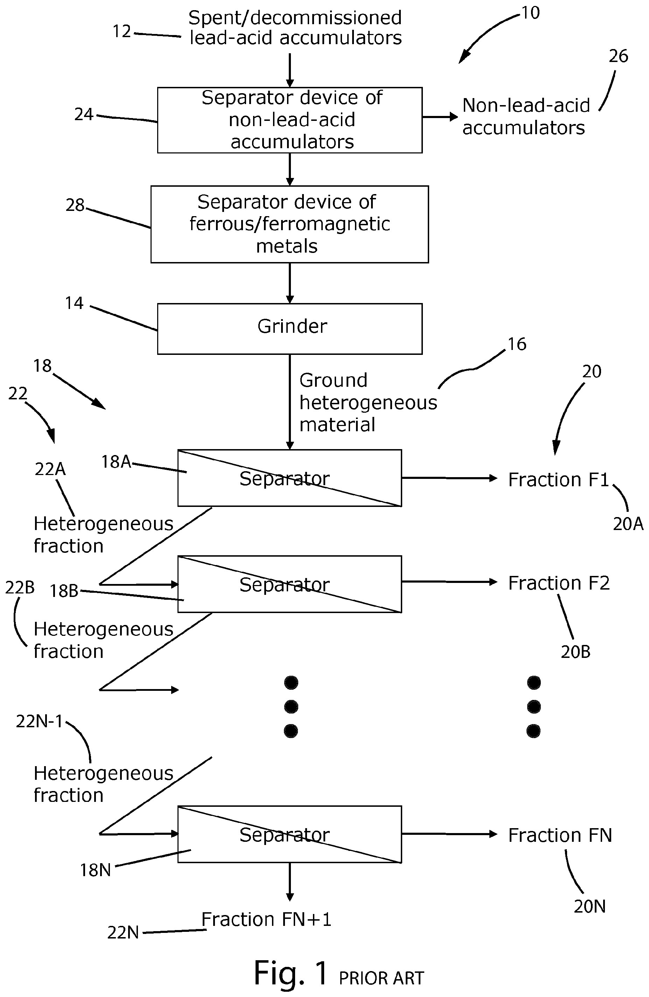

**Figure 1** shows a general diagram of a spent and/or decommissioned lead-acid accumulator treatment plant 10. The plant 10 comprises a grinder 14 receiving the spent or decommissioned lead-acid accumulators 12. The grinder outputs a ground heterogeneous material 16.

The plant 10 comprises a plurality of separators 18 (the number of three in the figure is purely illustrative and not limiting, and at least some innovative aspects disclosed herein may found an application in particularly simple plants or sub-plants, wherein there is even a single separator) in charge of separation of the ground product into output fractions 20, 22 as homogeneous as possible, if not even consisting of a single homogeneous material (chemical element or chemical compound).

In the case of the plant shown, the separators 18 are sequentially arranged, so that the first separator 18A (the most upstream one) receives the ground heterogeneous material 16 from grinder 14 and extracts (at least one) first fraction 20A ("fraction F1" in figure 1) therefrom, which is a homogeneous fraction, in the meaning of the term indicated above, or even a pure material. The first separator 18A outputs two output fractions 20A, 22A: said first fraction 20A and a heterogeneous fraction 22A formed of the remaining material after extraction of fraction 20A. It is noted that the fraction 22A is less heterogeneous than the ground heterogeneous material 16.

The second separator 18B receives, as input heterogeneous material, the heterogeneous output fraction 22A of the first separator 18A and extracts (at least one) second fraction 20B ("fraction F2" in figure 1) therefrom, which is a homogeneous fraction, in the meaning of the term indicated above, or even a pure material. The second fraction 20B separated by the second separator 18B has generally a different composition than that of the first fraction 20A separated by the first separator 18A.

Also the second separator 18B outputs two output fractions 20B, 22B: said second fraction 20B and a heterogeneous fraction 22B formed of the remaining material after extraction of the second fraction 20B. It is noted that the fraction 22B is less heterogeneous than fraction 22A, and even less heterogeneous than the ground heterogeneous material 16.

Similarly, each successive separator 18 receives, as input, a heterogeneous output fraction of the preceding separator 18 and outputs (at least) two respective output fractions 20, 22, each output fraction 20, 22 being homogeneous (the respective fraction 20 which is extracted from the material flow) or less heterogeneous than the respective input heterogeneous material (the respective remaining fraction 22, supplied to the successive separator).

In the case of the last separator 18N, the (at least) two output fractions 20N, 22N ("Fraction FN" and "Fraction FN+1" in figure 1) may both be homogenous, in the above meaning of the term, in the case of optimal treatment of the spent and/or decommissioned lead-acid accumulators 12.

Each of the output fractions 20, 22 may be reused as a secondary raw material, after any specific treatment, or it is waste. It is understood that it is advantageous that also the waste fraction is as homogenous as possible and in particular does not contain any valuable material.

In the plant 10, one or more of the separators 18 may carry out a multiple separation, namely the respective output fractions may be more than two, for example two homogenous fractions and a heterogeneous fraction subjected to further separation in the plant. Such a case is not shown for the sake of simplicity.

Alternatively or additionally, it is possible to provide, in the plant 10, also for separators 18 in parallel (not shown), namely which receive the same input heterogeneous material (from the grinder 14 or from another one of the separators 18) and which extract respective output fractions therefrom, equal to or different from one another. Such a case is not shown for the sake of simplicity.

The plant 10 may further comprise a separator device 24 of non-lead-acid accumulators, for detecting and moving away from the plant accumulators 28 other than lead-acid accumulators, in particular lithium-ion accumulators, that have been mistakenly disposed of with separate waste collection of lead-acid accumulators; such a device 24 may be for example of the X-ray type as described in WO2021/099930A1 of the Applicant, incorporated herein by reference. Such a device 24, optional in the plant 10, is not shown in some of the plants described below for the sake of simplicity, but it may also be provided for.

The plant 10 may further comprise a separator device of dismissed ferrous/ferromagnetic metals 28, arranged upstream of the grinder 12.

Such a separator device of ferrous/ferromagnetic metals 28, optional in the plant 10, is not shown in some of the plants described below for the sake of simplicity, but it may also be provided for.

In the plant 10, one single grinder 14 is shown, upstream of the separators 18. Plant 10, as well as the plants described below, may however comprise one or more further grinder(s), not shown for the sake of simplicity, each one configured to grind an output fraction 20 of one of the separators 18 before supplying it, as input heterogeneous material, to another one of the separators 18.

Plant 10, as well as the plants described below, may be configured to treat batches of spent and/or decommissioned lead-acid accumulators 12, or to treat a continuous flow of such accumulators.

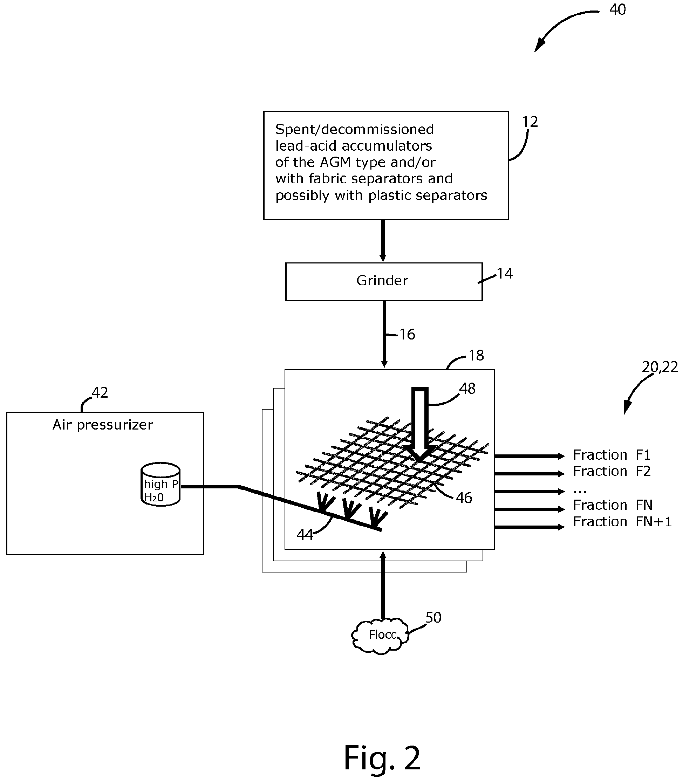

**Figure 2** shows a general diagram of a spent and/or decommissioned lead-acid accumulator treatment plant 40. In this case, the treated accumulators are of the Absorbent Glass Mat, AGM, type and/or with fabric separators, possibly mixed with accumulators with plastic separators.

The plant 40 comprises, besides the components discussed above with reference to figure 1 and their respective variants, a water pressurizing device 42 and at least one injector device 44 configured to selectively supply pressurized water generated by the pressurizing device 42 against an output face of a sieve 46 of at least one of said separator devices 18.

The injection direction of the pressurized water may be comprised between a direction orthogonal to the output face of the sieve 46 and a direction tangent to the output face of the sieve 46. The above-mentioned extreme directions are meant to be included in the possible injection directions.

In figure 2 an injector device 44 is shown at one single separator 18 provided with a sieve 46, but some of or all the separators 18 provided with a sieve 46 may be provided with a respective injector device 44.

A control unit (not shown) may adjust the turning on/off cycles of the pressurized water flow intended for the or each specific injector device 44 of a specific separator 18, besides supervising the flow rate adjustments, signalling any malfunction etc.

The water supplied to the water pressurizing device 42 may be mains water, for example originating from the process water mains and/or water recirculated within the plant 40.

The water pressurizing device 42 may be implemented in any suitable manner. Merely by way of a non-limiting example, it may be formed of a piston pump coupled to a centrifugal booster pump, the latter being connected to a water tank.

The water pressurizing device 42 may be connected to the injector device(s) 44 through a suitable system of pipes, valves, control instruments, e.g. for pressure control, safety valves, etc.

The pressure of the injected water is preferably higher than 100 bar.

As discussed in the introductory part of the present disclosure, with the selective injection of pressurized water, an advantageous "counter-current" washing of the sieve 46 is performed (with respect to the flow of material under separation through the sieve, symbolized by the arrow 48). Such washing achieves the detachment, from the mesh wall of the sieve 46, of the glass wool fibers and/or the textile fibers, originating from the ground separators (besides detachment of particles of other materials which possibly have become entangled in the filter meshes), which would otherwise risk clogging the sieve up. It is thus possible to treat lead-acid accumulators of the AGM type and/or with fabric separators in a same plant provided for treatment of lead-acid accumulators with plastics separators, even the simultaneous treatment of these three different accumulator types (or of two of them), what makes their separate collection or a separation operation before introduction into the plant superfluous.

Moreover, the various separators 18 equipped with a sieve 46 may remain constantly, or almost constantly, operational - and therewith the entire plant 40 - no plant shutdown for cleaning the sieves 46 being necessary, or in any case that necessity being less recurring.

The separator 18 comprising the sieve 46 may be, for example, a lead pastel separator; a separator of lead pastel and of a lead-based metal fraction, derived from contact components; a separator of plastics floating in water or more generally in the material under separation (light plastics); a separator of plastics sinking in water or more generally in the material under separation (heavy plastics).

The plant 40 shown may further comprise, as diagrammatically shown, a supplying device (for example, a dispenser) of a flocculant material 50 at or in proximity of the (or of each) separator device 18 comprising the sieve 46.

The flocculant material allows the fibers to aggregate into floccules, which by virtue of their greater weight may sink and be collected, as precipitate or sediment, in the same separator device 18 comprising the sieve 46 or in a device downstream thereof, for example in another separator device 18.

The flocculant material may comprise an anionic flocculant material and/or a cationic flocculant material. By providing for those two flocculant materials, the advantage is obtained that with the cationic flocculant, the glass fibers (originating from the separators of the accumulators of the AGM type) and/or the textile fibers (originating from the separators of the accumulators with fabric separators) are ionized; the fact that the fibers are ionized allows the anionic flocculant to be more effective in making them aggregate into floccules.

The formed floccules, instead of being disposed of (what is however not necessarily excluded), may be collected in an output fraction of the plant 40 comprising lead material. Said output fraction comprising lead material may be separated by the same separator device 18 comprising the sieve 46 subjected to backwash, or by another separator device 18 downstream thereof.

As discussed in the introductory part of the present disclosure, the following metallurgical process for treating lead material benefits from the presence of the fibers collected in the form of floccules - fibers which instead, performing washing of the sieve off-line, with plant shutdown, would be dispersed in the rinsing water.

Indeed, the glass fibers bring silica, which favours scorification; the textile fibers provide an energy contribution, which moreover is of a nonpolluting type.

The flocculant material may be directly supplied into the separator device 18 comprising the sieve 46 and/or into the flow of material immediately upstream of the separator device 18 comprising the sieve 46 and/or in a device (for example in another separator) upstream of the separator device 18 comprising the sieve 46 and/or into the flow of material immediately downstream of the separator device 18 comprising the sieve 46 and/or in a device downstream of the separator device 18 comprising the sieve 46.

When both a cationic flocculant material 50 and an anionic flocculant material 50 are provided for, then the cationic flocculant material may be supplied into a device upstream of the separator device 18 comprising the sieve 46 and/or into the flow of material immediately upstream of the separator device 18 comprising the sieve 46 and/or directly into the separator device 18 comprising the sieve 46; and the anionic flocculant material may be supplied directly into the separator device 18 comprising the sieve 46 and/or into the flow of material immediately downstream of the separator device 18 comprising the sieve 46 and/or into a device downstream of the separator device 18 comprising the sieve 46.

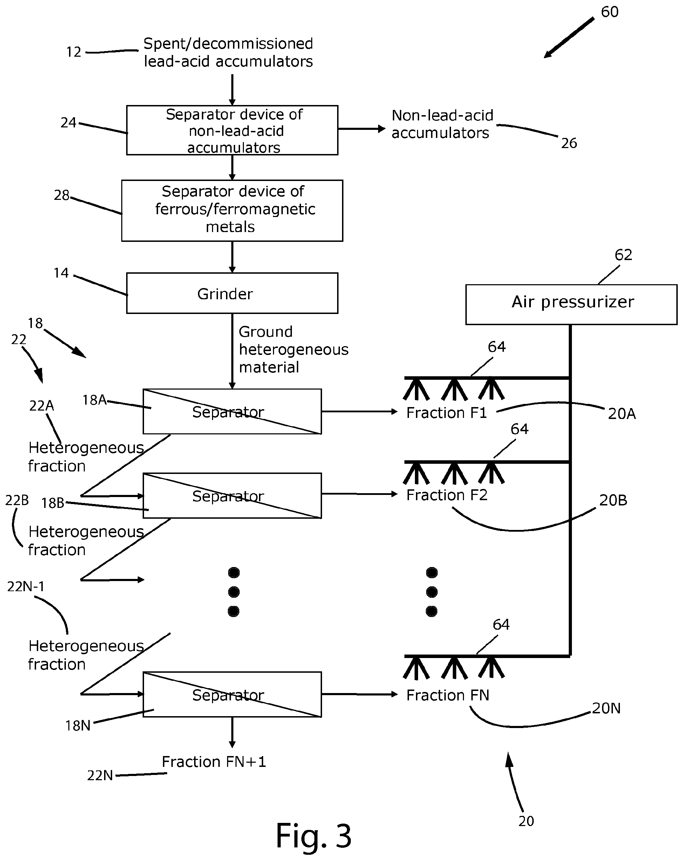

**Figure 3** shows the general diagram of a spent and/or decommissioned lead-acid accumulator treatment plant 60. The plant 60 comprises, besides the components discussed above with reference to figure 1 and to the respective variants, an air pressurizing device 62 and at least one diffuser 64 configured to diffuse compressed air generated by the pressurizing device 62 onto at least one of said output fractions 20, 22 (Fraction F1, Fraction F2, ..., Fraction FN, Fraction FN+1) of at least one of said separator devices 18.

In figure 3, a diffuser at each of the separators 18 is shown, however one or more of the separators might lack a diffuser; one or more of the separators 18 might be provided with more than one diffuser 64, for example a diffuser for each one of its output fractions.

A control unit (not shown) may adjust the pressure, the flow rate, the turning on/off cycles, etc., of the compressed air flow, intended for the or each specific diffuser 64 of a specific separator 18, besides supervising the flow rate adjustments, signalling any malfunction etc.

The air pressurizing device 62 may be implemented in any suitable manner. Merely by way of a non-limiting example, it may comprise, for example, a rotary compressor.

The air pressurizing device 62 may be connected to the diffusers 64 through a suitable system of pipes, valves, deflectors, control instruments, e.g. for pressure meters.

The diffuser 64 may be arranged, for example, at a screw conveyor device (not shown) provided downstream of the respective separator 18 to convey its output fraction 20, 22 further downstream in the plant 60, for example to convey it to a container of the dried output fraction.

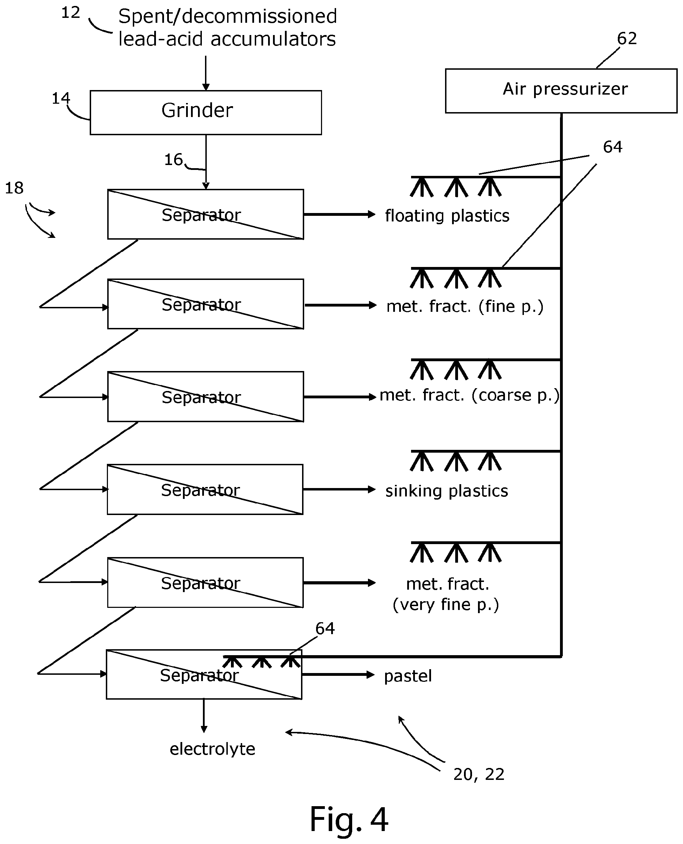

According to an alternative, not to show in figure 3 for the sake of simplicity, still represented in figure 4 described below, the compressed air diffuser 64 may be provided for internally of the separator device 18 itself.

As discussed in the introductory part of the present disclosure, through diffusion of compressed air, the various fractions 20, 22 (Fraction F1, Fraction F2, ..., Fraction FN, Fraction FN+1) which are gradually separated from the ground heterogeneous material 16 generated by the spent/decommissioned accumulator grinder 14, specifically those representing secondary raw material or possibly waste, are at least partially dried, noticeably reducing the residual moisture thereof, what reduces or eliminates the risk of contamination by acid water. The reduced residual moisture content also favours and speeds up, in particular as far as the lead-based metal fraction derived from contact components and the lead pastel are concerned, the following metallurgical treatment in a furnace, thus making it less expensive and sustainable.

The use of compressed air blades through diffusers eliminates the majority of the residual moisture of the output fractions of the liquid phase separators, allowing substantially dry products to be obtained, wherein under drying, in the present description and attached claims, a reduction of the residual moisture content below a preset threshold, for example of 10% (in standard atmosphere), is meant.

Experimental tests have shown that it is possible to obtain, for example, a residual moisture content as indicated below: polypropylene and ABS: ≤3% by weight; PET: ≤30% by weight; metal fraction derived from contact components: ≤ 2% by weight for fine particles and ≤ 8% by weight for very fine particles.

**Figure 4** shows, merely by way of a non-limiting example, an embodiment of a plant 60 with separators 18 onto which output fractions 20, 22 it may turn out to be particularly advantageous to use a compressed air diffuser 64.

Diffusers 64 are shown at the output of plastic separators, for example of a separator of plastics floating in the material under separation (e.g. polypropylene) and of a separator di plastics sinking in the material under separation.

A diffuser 64 at a pastel separator is shown. The diffuser 64 is shown, merely by way of a non-limiting example, internally of the separator 18 itself. This may be, for example, the case of a separator device configured as a filter press.

Diffusers 64 are shown at the output of separators of a lead-based metal fraction, derived from contact components, for example three separators of fractions having particles of different size, indicated in the figure as fine, coarse and very fine, said terms being comparative to one another.

In greater detail:
- adjective "coarse" is used to indicate particles having a size larger than an upper threshold,
- adjective "fine" is used to indicate particles having a size comprised between a lower threshold and the upper threshold (threshold values included),
- adjective "very fine" is used to indicate particles having a size smaller than the lower threshold.

It is understood that in practice, the coarse fraction may also comprise a neglectable amount of particles having a size smaller than the upper threshold, and the fine fraction may also comprise a neglectable amount of particles having a size smaller than the lower threshold.

For example, the upper threshold is comprised between 6 and 16 mm, preferably between 8 and 12 mm, even more preferably is 10 mm.

For example the lower threshold is comprised between 0.5 and 4 mm, preferably between 1 and 3 mm, even more preferably is 2 mm.

Preferably the coarse particles have a size comprised between said upper threshold and the maximum size obtained by the grinder, which may for example be 80 mm.

Preferably the very fine particles have a size comprised between 0.1 mm and said lower threshold.

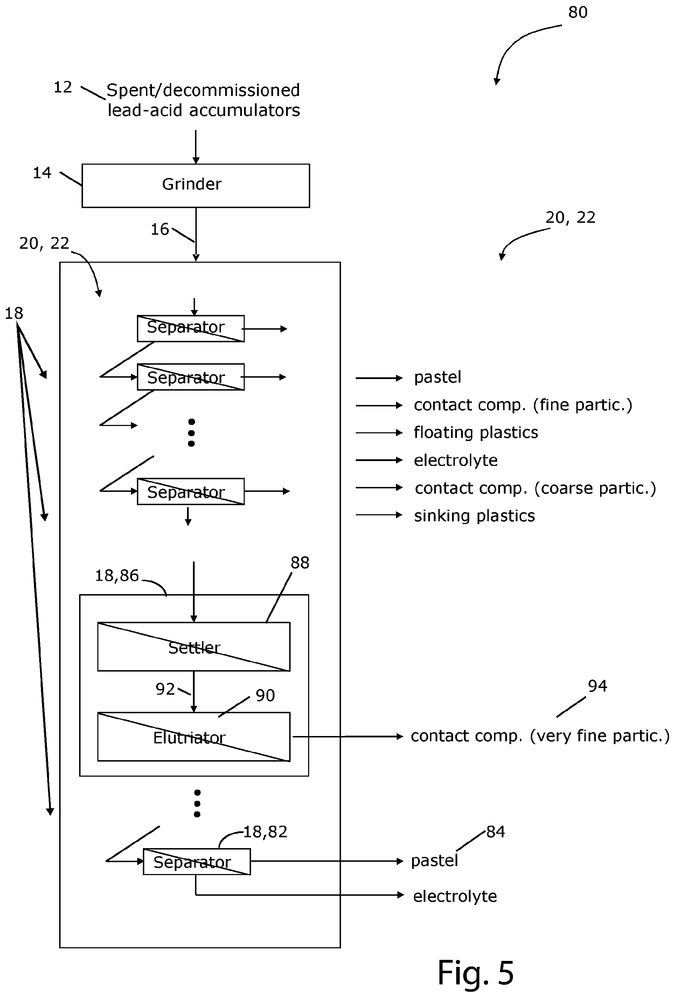

It is emphasized that use of three metal fraction separators, and in particular of a separator of very fine particles, is innovative *per se,* as will become clear hereinbelow with reference to figure 5.

Conversely, it is not provided for using a compressed air diffuser 64 at an output fraction comprising the electrolyte, which may for example be the second output fraction of the pastel separator, as shown.

The separators 18 are sequentially shown in figure 4 merely by way of a non-limiting example.

It is again emphasized that, in any embodiment of the plant 60, not necessarily a diffuser 64 is provided for at each one of the fractions shown in figure 4 and listed above.

**Figure 5** shows a general diagram of a spent and/or decommissioned lead-acid accumulator treatment plant 80. The plant 80 comprises the components discussed above with reference to figure 1 and the respective variants, but some peculiarities are emphasized.

One of said separators 18, also indicated with reference 82, is configured to extract pastel as one of said respective output fractions 20, 22, indicated as output fraction 84 herein.

Another one of said separators 18, indicated as separator 86 herein, comprises a settler 88 and an elutriator 90 configured to be inputted the material 92 settled in the settler 88 and to extract therefrom a lead-based metal fraction (derived from contact components of the accumulators), as one of said output fractions of said other separator 18, 86, indicated as output fraction 94 herein.

This separator 18, 86 of lead-based metal fraction is arranged upstream of the pastel separator 18, 82, but it is not strictly necessary that it is immediately upstream thereof, vice versa it is possible that one or more further separators are arranged between the two.

As mentioned in the introductory part of the present disclosure, thanks to that separator 18, 86 comprising the elutriator 90 downstream of the settler 88, arranged upstream of the pastel separator 18, 82, it is possible to extract the lead or lead alloy metal residue, derived from contact components of the accumulators, which has not been separated by preceding separator devices. In particular, the very fine particles of the ground fraction of contact components represent a highly valuable material because they are free of sulphates and other impurities, which are conversely present in the active mass and therefore in the pastel. By purposely and separately separating these very fine particles, rather than letting them be collected in the lead pastel separated downstream, a material having a higher metallurgic yield than that of pastel, therefore more valuable, is obtained.

Also in this context, "very fine particles" may be considered those having a size less than the above-mentioned lower preset threshold.

Among said separators 18, there may also be provided for a separator configured to extract, as one of said respective output fractions, a second lead-based metal fraction, having particles having a size larger than the particle size of said lead-based metal fraction separated by the elutriator 90, in particular larger than said lower preset threshold.

It is understood that in practice, the second lead-based metal fraction may also comprise a neglectable amount of particles having a size smaller than the lower preset threshold.

As shown, two of those separators 18 may be provided for, configured to extract, respectively:
- a lead-based metal fraction having particles having a size larger than the lower preset threshold and less than an upper preset threshold (and a neglectable amount of particles having a size smaller than the lower preset threshold), called "fine particles" herein,
- a lead-based metal fraction having particles having a size larger than the upper preset threshold, called "coarse particles" herein.

The upper preset threshold may have, also in this context, the above indicated values.

Also these lead-based metal fractions may be derived from the contact components of the accumulators.

These two further separator devices 18 may be provided upstream of the separator 18, 86 comprising the elutriator 90 and the settler 88.

In the plant 80, other separators 18 may be configured to output, as one of the respective output fractions 20, 22, one or more polymer fractions, specifically, in the case shown, a fraction comprising plastics floating in the liquid material being treated and a fraction comprising plastics sinking in the liquid material being treated; as well as a fraction comprising electrolyte and/or a further lead pastel fraction.

In figure 5, all of these additional separators 18 are shown upstream of the separator 86 comprising the settler 88 and the elutriator 90, but this is not strictly necessary, as long as the mutual placements mentioned above are met.

In figure 5, the various output fractions are shown in a given order, but this is merely illustrative and non-limiting. When also the separator of lead-based metal fraction having fine particles is provided for, upstream of the above-mentioned combination of settler 88 and elutriator 90 forming the separator 18, 86 of lead-based metal fraction, a very high purity and therefore quality of the very fine lead powders separated by the elutriator 90 is achieved.

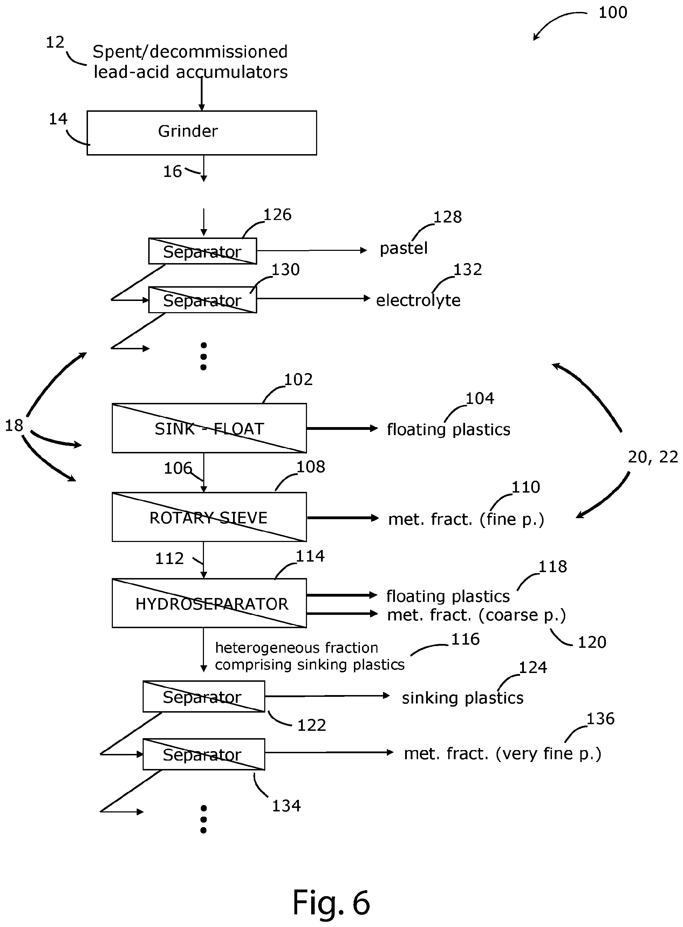

**Figure 6** shows a general diagram of a spent and/or decommissioned lead-acid accumulator treatment plant 100. The plant 100 comprises the components described above with reference to figure 1 and the respective variants, but some peculiarities are highlighted.

One of the separators 18 is a sink-float device 102, one of the respective output fractions 20, 22, indicated as output fraction 104, comprising plastics floating in the material under separation, for example polypropylene.

One of the separators 18 is a rotary sieve device 108, the respective input heterogeneous material being the other output fraction 106 of the sink-float device 102, one of the respective output fractions 20, 22, indicated as output fraction 110, being a lead-based metal fraction.

The lead-based metal fraction 110 may be derived from contact components of the accumulators.

The size of the particles of the lead-based metal fraction 110 may be comprised between a lower preset threshold and an upper preset threshold ("fine particles"), however in practice there may also be a neglectable amount of particles having a size smaller than the lower preset threshold. Those thresholds may have, also in this context, the above indicated values.

One of the separators 18 is a hydrodynamic separator or hydro-separator 114, the respective input heterogeneous material being another output fraction 112 of the rotary sieve device 108, one of the respective output fractions 20, 22, indicated as output fraction 116, being a heterogeneous fraction comprising sinking plastics, for example including the fragments of the accumulator containers and covers.

The hydrodynamic separator 114 may be configured to extract the heterogeneous fraction comprising sinking plastics 116 through an ascending stream.

Another output fraction 20, 22 of the hydrodynamic separator 114, indicated as output fraction 118 herein, may also comprise plastics floating in the material under separation.

Alternatively or additionally, another output fraction 20, 22 of the hydrodynamic separator 114, indicated as output fraction 120 herein, may be a second lead-based metal fraction.

Also the second lead-based metal fraction 120 may be derived from contact components, specifically grids forming a supporting structure of electrodes of individual cells of the accumulators, poles and bridges or "posts".

The size of the particles of the second lead-based metal fraction 120 may be larger than the upper preset threshold ("coarse particles"); in practice there may also be a neglectable amount of particles having a size smaller than the upper preset threshold.

Among the separators 18 of the plant 100, a separator 122 of plastics sinking in the material under separation (output fraction 124) may also be provided for, which input material is said heterogeneous fraction comprising sinking plastics 116 and therefore arranged immediately downstream of the hydrodynamic separator 114.

Alternatively or additionally, among the separators 18 of the plant 100, a separator 126 of pastel (output fraction 128) may also be provided for, preferably, but not necessarily, arranged upstream of the sink-float device 102.

Alternatively or additionally, among the separators 18 of the plant 100, a separator 130 of electrolyte (output fraction 132) may also be provided for, preferably, but not necessarily, arranged upstream of the sink-float device 102.

Alternatively or additionally, among the separators 18 of the plant 100, a separator 134 of a third lead-based metal fraction (output fraction 136) may also be provided for, preferably, but not necessarily, arranged downstream of the hydrodynamic separator 114.

The third lead-based metal fraction may be derived from contact components of the accumulators.

The particles of the third lead-based metal fraction 128 may have a size smaller than the lower preset threshold ("very fine particles").

As discussed in the introductory part of the present disclosure, using the rotary sieve device 108 downstream of the sink-float device 102 allows the lead-based metal fraction, for example fine particles of lead-calcium alloy, to be extracted from the treated material, allowing proper function of the hydrodynamic separator 114, provided further downstream (specifically, downstream of the rotary sieve device 108) and configured to extract the heterogeneous fraction comprising sinking plastics 116. Indeed, the rotary sieve 108 prevents those lead-based metal particles from reaching the hydrodynamic separator 114, where they would weigh down the sinking plastics too much, preventing an effective separation thereof, for example by ascent.

As extensively indicated in the introductory part of the present disclosure, the various provisions indicated with reference to the plants of figures 2-6, or some of them, may be combined in the same treatment of spent and/or decommissioned lead-acid accumulators.

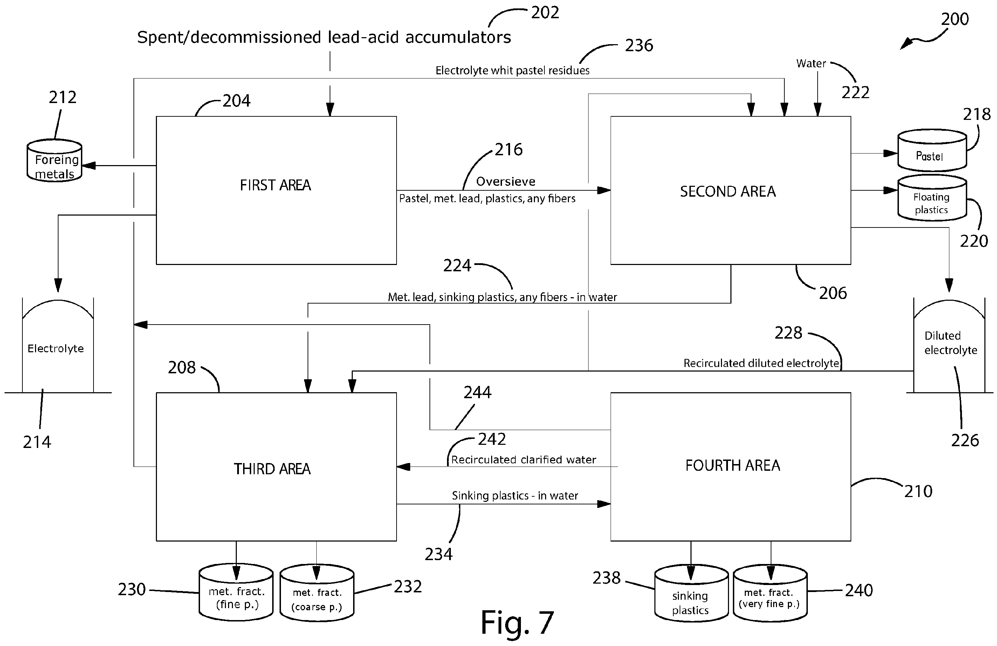

**Figure 7** shows a general diagram of a spent and/or decommissioned lead-acid accumulator treatment plant 200, highlighting a possible flow of treated material and possible flows of auxiliary materials, as well as a possible flow of materials recirculated in the plant for further treatment or as auxiliary materials.

The plant 200 comprises four areas sequentially arranged and defining the direction of the treatment flow of the spent and/or decommissioned lead-acid accumulators 202: a first area 204, a second area 206, a third area 208, a fourth area 210.

The spent and/or decommissioned lead-acid accumulators 202 are sent to the first area 204, where they are subjected to a preliminary treatment with which, for example:
- foreign metals (ferrous and/or ferromagnetic) are removed, which are for example collected in a container 212,
- the accumulators are subjected to a first grinding (pre-crushing) which releases their electrolyte (H2SO4 and H2O) (or at least a prevailing part thereof) without changing the concentration thereof, which electrolyte is sieved and filtered and then collected in a container 214 to be reused as secondary raw material (for example as pickling product in galvanization), possibly after treatment, for example by purification or neutralization processes.

The remaining material fraction, sent to the second area 206, is represented by oversieve 216, comprising pastel (PbSO₄, PbO and PbO₂), metal lead deriving from contact components (Pb-Ca, Pb-Sb), and plastics, in particular polypropylene (PP), polyethylene terephthalate (PET) and acrylonitrile-butadiene-styrene (ABS), as well as possibly glass and/or textile fibers in the case of accumulators of the AGM type and/or with fabric separators, besides a part of the electrolyte which has not been separated in the first area 204.

Such oversieve material 216 continues, along the direction of the treatment flow, to the second area 206, dedicated for example:
- to pastel extraction, collected (after any filtration) in a container 218 to be reused, for example in new lead-acid accumulators, after specific treatment in a manner known *per se,* for example a melting treatment to produce pure lead or lead alloys, and
- to extraction of floating plastics, for example polypropylene, collected in a container 220 to be recycled as secondary raw material, after any specific treatment in a manner known *per se.*

In the second area 206, a second grinding may take place.

In the second area 206, the oversieve 216 is washed with water 222, so as to allow a liquid phase treatment thereof, which generally turns out to be more advantageous with respect to a solid phase treatment.

Under "water", water acidified by the acid contained in the electrolyte should be meant to be encompassed.

The pastel extraction takes preferably place by subjecting it to thickening and filtration.

Alternatively or additionally, the pastel may be subjected to at least partial drying through compressed air as indicated above.

The extraction of the floating plastics may take place, for example, in the sink-float device and/or in the hydrodynamic separator discussed above.

In any case, also the floating plastics may be subjected to at least partial drying through compressed air as indicated above.

The remaining material fraction 224, sent to the third area 208, comprises sinking plastics (specifically silica loaded polyethylene terephthalate (PET)), and metal lead deriving from contact components, as well as any glass and/or textile fibers.

Washing the material treated in the second area 206 with water 222 also favours release of any electrolyte residue, which for example soaks other materials in the accumulator. The electrolyte residue 228, which is thus diluted, is recirculated (after any filtration) in part to the second area 206 itself, and in part is also sent to the third area 208, after possibly being stored in a container 226.

In the third area 208, extraction of metal lead takes place, derived from the contact components of the accumulators. The extraction may take place with classification by size, for example:
- extraction of metal lead having a particle size smaller than an upper threshold ("fine particles"), but typically (and preferably) predominantly larger than a lower threshold (e.g. lead-calcium), therefore in practice which may also comprise a neglectable amount of particles having a size smaller than the lower threshold, which is collected in a container 230 to be recycled, after any specific treatment in a manner known *per se,* for example a melting treatment, and
- extraction of metal lead having a particle size larger than such upper threshold ("coarse particles") (e.g. lead-antimony), which however in practice may also comprise a neglectable amount of particles having a size smaller than the upper preset threshold, which is collected in a container 232 to be recycled, after any specific treatment in a manner known *per se,* for example melting or reduction.

Also in this context, the thresholds may have the above indicated values.

Also, the separated metal lead fractions may be subjected to at least partial drying through compressed air as indicated above, before storing in the container 230 and/or in the container 232.

The extraction of coarse particles of metal lead may take place, for example, through the above discussed hydro-separator.

The extraction of fine particles of metal lead may take place, for example, through the above discussed rotary sieve.

The remaining material fraction 234, sent to the fourth area 210, is predominantly represented by plastics sinking in water.

When, in the third area 208, a rotary sieve is used as discussed above, this allows the further electrolyte residue with pastel residue to be recovered; this material 236 is recirculated from the third area 208 to the second area 206.

In the fourth area 210 there takes place, for example:
- extraction of sinking plastics (for example, the silica loaded PET), collected in a container 238 to be recycled as secondary raw material or for possible disposal as waste, after specific treatment in a manner *known per se,*
- when a settler and an elutriator are used as described above in the fourth area 210, the extraction of metal lead having a particle size smaller than the lower threshold ("very fine particles"), collected in a container 240 to be recycled, after specific treatment in a manner known *per se.*

Also the sinking plastics and/or the very fine lead particles may be subjected to at least partial drying through compressed air as indicated above, before storage in the container 238 and/or in the container 240.

The clarified water 242 in the settler of the fourth area 210, where provided for, may be recirculated from said fourth area 210 to the third area 208, specifically to the hydro-separator, if used in such third area 208.

When an elutriator is used, as discussed above, in the fourth area 210, this allows the further electrolyte residue with pastel residue to be recovered; such material 244 is recirculated from the fourth area 210 to the second area 206.

In the plant 200 of figure 7, the provision of backwashing the various sieves with pressurized water may be used.

In the plant 200 of figure 7, the provision of adding flocculant material, in particular a cationic flocculant material and an anionic flocculant material, may be used as indicated above.

The various containers may however be replaced, each one, by a suitable collection box or may be absent and replaced by a suitable collecting area.

The various containers (or variants thereof) shown in the plant 200 may be omitted when the respective material is directly sent to a dedicated treatment plant or to a station reusing the same.

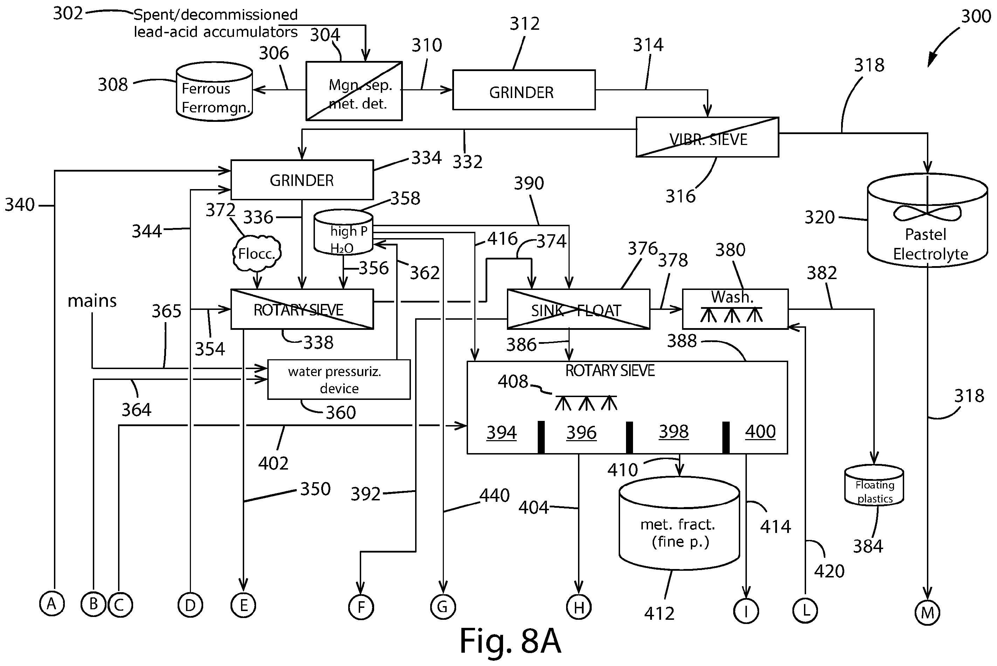

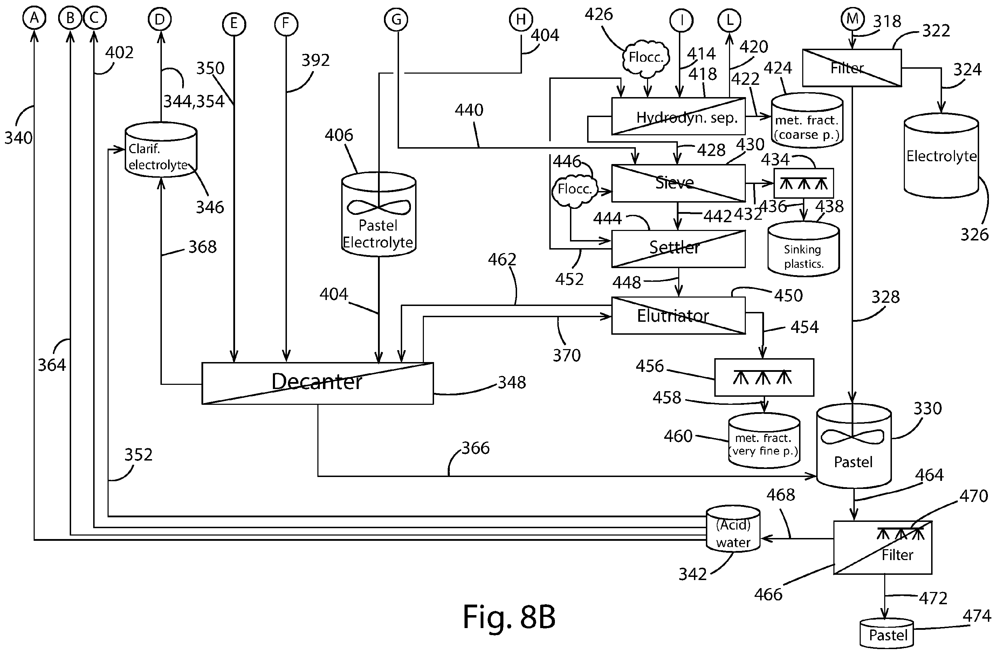

**Figure 8****,** split in two figures 8A and 8B, shows a general diagram of an embodiment of a spent and/or decommissioned lead-acid accumulator treatment plant 300 which incorporates all the innovative aspects of the subject-matter disclosed herein.

The plant 300 comprises a magnetic separator/metal detector 304 which is inputted the spent and/or decommissioned lead-acid accumulators 302 and separates the ferrous and/or ferromagnetic components 306, which are sent for example to a respective container 308 (to be recycled or disposed of), from the flow of material 310, which continues in the plant 300 into a grinder 312 or pre-crusher and which may be, for example, a hammer mill.

The ground heterogeneous material 314 continues in the plant 300 into a separator, which may be a vibrating sieve 316. The output fraction 318 passing through the vibrating sieve 316 substantially comprises concentrated electrolyte (H2SO4 and H2O) and pastel (PbSO4, PbO and PbO2), and is temporarily stored in a stirred tank 320; thereafter, it is filtered in a filter 322, which separates the electrolyte 324, stored in a container 326, from pastel 328, which is temporarily stored in a stirred tank 330 and subjected to further treatments described further below. The collected electrolyte is intended, after having been for example purified or neutralized, to be recycled as secondary raw material or disposed of as waste, as indicated above with reference to figure 7.

The other output fraction of the vibrating sieve 316, namely the oversieve 332 comprising i.a. the metal lead deriving from the contact components, plastics and possibly glass and/or textile fibers (if among the accumulators 302 there are AGM accumulators and/or accumulators with fabric separators), besides a part of pastel and electrolyte not previously separated, continuous in the plant into a second grinder 334, for example a hammer mill, and then, as ground fraction 336, into a separator of the rotary sieve type 338.

In the grinder 334, water 340 is also input, preferably water recirculated in the plant 300 and temporarily stored in a tank 342, and/or clarified electrolyte 344 which is temporarily stored in a container 346, having been recovered by a decanter 348 in which the pastel and electrolyte suspension 350 being one of the output fractions from the rotary sieve 338 (besides further material as will be stated further below) is collected.

It is emphasized as of now that the water 340 in the tank 342, having been recirculated from elsewhere in the plant 300 as will be stated further below, may be acidified by the acid contained in the electrolyte; this notwithstanding, hereinbelow reference will be made to water for the sake of brevity.

In the container 346, the electrolyte is in turn added with water 352, also in this case, preferably water recirculated in the plant 300 and temporarily stored in the above-mentioned tank 342.

In the rotary sieve 338, the pastel residue is washed away with high efficiency, even greater than 90%, also in this case using clarified electrolyte 354 temporarily stored in the container 346.

The separation meshes of the rotary sieve 338 may be subjected to backwash with high pressure water 356, for example temporarily stored in a container 358, in order to remove the glass fiber and/or textile fiber filaments possibly present in the case of treatment of spent/decommissioned accumulators 302 of the AGM type and/or with fabric separators, possibly mixed with accumulators with plastic separators, filaments which might clog up the holes of the meshes themselves. In figure 8, for the sake of simplicity an injector device of the pressurized water is not shown.

A water pressurizing device 360 supplies the high pressure water 362 into the container 358, preferably also drawing from the water 364 recirculated in the plant 300 and temporarily stored in the above-mentioned tank 342. Alternatively or additionally, the water pressurizing device 360 may be supplied with mains water 365, preferably originating from the process water mains.

As mentioned, the decanter 348 is supplied, i.a., with the pastel and electrolyte suspension 350 output from the rotary sieve 338. In the decanter 348, the pastel 366 is collected at the bottom exploiting its high specific weight, and conveyed into the above-mentioned stirred tank 330. The pastel 366 represents one of the output fractions of the decanter 348, the other ones being represented by clarified electrolyte 368 sent to the above-mentioned container 346 and by clarified electrolyte 370 sent into a separator arranged further downstream in the plant, described further below (elutriator 450).

In order to accelerate the settling rate of the pastel and of the glass/textile fibers within the decanter 348, within or immediately downstream of the rotary sieve 338, a device 372 for supplying a flocculant material may be provided for, preferably two different flocculant types: anionic one and cationic one. Preferably, the cationic flocculant material is supplied into the rotary sieve 338, while the anionic flocculant material is supplied downstream of the rotary sieve 338, through another supplying device, not shown for the sake of simplicity.

The cationic flocculant material ionizes the glass fibers and/or the textile fibers released by the lead/acid accumulators of types containing them; the anionic flocculant material favours aggregation into floccules and, as a consequence, settling of those fibers.

The other output fraction of the rotary sieve 338, which is still a rather heterogeneous material 374, is subjected to further separation, for example in a sink-float device 376.

In the sink-float device 376, the plastics 378 floating in the material under separation are separated thanks to the lower specific weight, washed and partially dried in a device 80, wherein drying takes place for example through a compressed air diffuser as indicated above; said dried floating plastics 382 are for example stored in a container 384 to be recycled as secondary raw material, after any specific treatment in a manner known *per se.*

The air pressurizing device and the plant for supplying compressed air to the device 380 and to other positions of the plant 300, as described below, are not shown in figure 8 for the sake of simplicity.

Another output fraction 386 of the sink-float device 376, collected at its bottom, is quite heterogeneous and comprises the metal lead deriving from the contact components and plastics sinking in the material being treated, heavier than those already separated, as well as possibly the glass and/or textile fibers; the fraction 386 is sent to a second rotary sieve 388.

Also the sink-float device 376 may be subjected to backwashing with pressurized water 390 originating for example from the above-mentioned container 358. In figure 8, an injector device of the pressurized water is not shown for the sake of simplicity.

The solution 392 of electrolyte and any pastel residues in suspension, representing another one of the output fractions of the sink-float device 376, is supplied to the decanter 348.

The second rotary sieve 388 is, for example, comprised of four sections 394, 396, 398, 400.

In the first section 394, the input heterogeneous material arriving from the sink-float device 376 (the output fraction 386 of the latter) is immersed within an aqueous solution -the water 402 being for example recirculated (acid) water provided by the above-mentioned tank 342- in order to deeply remove any pastel still present.

In the second section 396, an output fraction 404, comprising pastel together with electrolyte, is drained and, for example, collected in a stirred tank 406, to be supplied to the decanter 348.

The material from which the output fraction 404 has been washed away is subjected to partial drying, for example through a compressed air diffuser 408 as discussed above, before being transferred to the third section 398.

In the third section 398, the lead-based metal fraction 410 is separated, which particles have a size smaller than an upper preset threshold and, typically, predominantly a size larger than a lower preset threshold ("fine particles"), which therefore may comprise, in practice, also a neglectable amount of particles having a size smaller than the lower preset threshold. The fraction 410 is for example stored in a container 412 to be recycled, after any specific treatment in a manner known *per se,* for example, a melting treatment as discussed above with reference to figure 7.

From the fourth and last section 400, the remaining material comes out, which is a still fairly heterogeneous fraction 414, comprising i.a. the metal lead derived from contact components and the plastics sinking in the material being threaded, as well as possibly the glass and/or textile fibers.

Also the second rotary sieve 388 may be subjected to backwash with pressurized water 416 originating for example from the above-mentioned container 358. In this case, for the sake of simplicity an injector device of the pressurized water is not shown.

The heterogeneous fraction 414 continues in the plant 300 to a hydrodynamic separator or hydro-separator 418.

In the hydro-separator 418, any plastics 420 floating in the material under separation, which escaped separation in the sink-float device 376, are recovered and sent to the above-mentioned washing and drying device 380, to then be collected in the above-mentioned container 384. The lead-based metal fraction 422 derived from the contact components (for example, of Pb-Sb), collected at the bottom, is extracted and collected for example in a container 424. A device 426 for supplying a flocculant material into the hydro-separator 418 may be provided for, in order to favour the collection of said materials at the bottom.

The heterogeneous output fraction 428 containing plastics sinking in the material under separation, separated in the hydro-separator 418 through an ascending stream, continues in the plant 300 into a sieve type separator 430.

In the sieve 430, the plastics sinking in the material under separation 432 are separated, may be subjected to drying for example through a compressed air diffuser 434 as indicated above, and the plastics 436 which sank and have been dried are collected in a container 438.

Also the sieve 430 may be subjected to backwash with pressurized water 440 originating for example from the above-mentioned container 358. Also in this case, for the sake of simplicity an injector device of the pressurized water is not shown.

The liquid fraction 442 draining in the sieve 430, and which carries the residual lead-based metal fraction, originating from the contact component, having a very small particle size, which may have escaped separation in the rotary sieve 388, and the lead pastel residue, continues in the plant 300 into a settler 444. Also in this context, the particle size may be considered smaller than a lower preset threshold, to which the above indicated numerical values apply ("very fine particles").

In order to accelerate the settling speed within the settler 444, a device 446 for supplying a flocculant material into the sieve 430 and/or into the settler 444 may be provided for.

When, for the reasons discussed above, both a cationic flocculant material and an anionic flocculant material are used, the cationic flocculant material may be inserted into the sieve 430, where it ionizes the glass fibers and/or the textile fibers released by the lead/acid accumulator types containing them; the anionic flocculant material is thereafter inserted into the settler 444, where it favours aggregation into floccules and, as a consequence, settling of those fibers.

The fraction 448, still heterogeneous, decanted in the settler 444 continues in the plant 300 into an elutriator 450, while the liquid fraction 452 is recirculated to the hydro-separator 418, where it dilutes the fraction 414 which arrives therein from the second rotary sieve 388 after partial drying through the compressed air diffuser 408.

The lead-based metal fraction 454 with a particle size smaller than the lower threshold is collected at the bottom in the elutriator 450, may be dried at least partially, for example through a compressed air diffuser 456 as indicated above, and the dried fraction 458, very valuable for the reasons stated above, is collected in a container 460 to be recycled, after any specific treatment in a manner known *per se,* for example a melting treatment.

In the elutriator 450, also the pastel is separated, by means of the clarified electrolyte 370 originating from the decanter 348 as mentioned above, and thanks to the stirring internal to the elutriator 450 itself; such a fraction 462 comprising pastel and electrolyte is recirculated into the decanter 348.

As described above, in the stirred tank 330, the pastel separated in plural positions of the plant 300 is collected, thus with high efficiency.

The pastel 464 taken from the stirred tank 330 is filtered through a filter 466, specifically a filter press, which separates the liquid fraction 468 supplying the tank 342 for (acid) process water, recirculated in the plant 300 as described above, for replenishing the operating level of some components.

The recirculated acid process water may be used, moreover, for different uses, for example for washing the plant lines.

The pastel accumulated and dehydrated in the filter press 466 maybe dried in order to reduce its residual moisture, through a compressed air diffuser 470 as indicated above, and possibly squeezed, for example by providing the filter with a squeezer device, not shown.

The dried pastel 472 is collected in a container 474 to be reused in new lead-acid accumulators, after specific treatment in a manner known *per se,* for example a melting treatment in order to produce pure lead or lead alloys, as indicated above with reference to figure 7.

In figure 8, a possible device for detecting and moving away from the plant accumulators other than lead-acid accumulators is omitted, which may be arranged upstream of the magnetic separator/metal detector 304.

In the plant 300 there may be a system for the removal of acid fumes, not shown for the sake of simplicity.

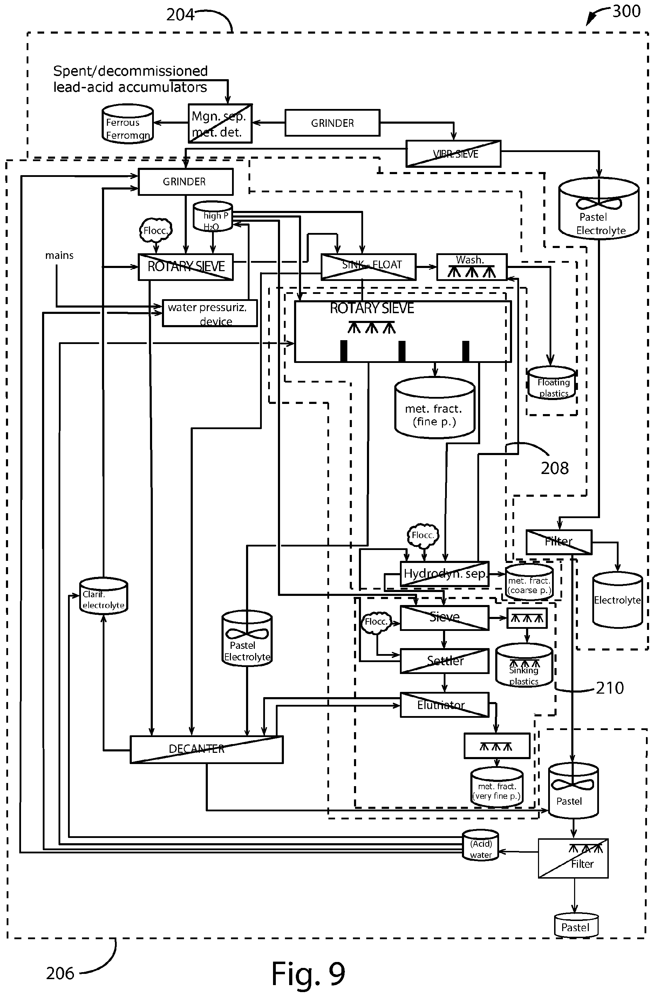

**Figure 9** is a reduced version of the plant of figure 8 described above, in which the four areas 204, 206, 208, 210 of the plant diagram according to figure 7 described above are highlighted.

The various alternative embodiments, variants and/or capabilities of each component or component group which have been described are to be meant as combinable with each other in any manner, unless they are incompatible with each other.

The above is a description of various embodiment of inventive aspects, and further changes can be made without departing from the scope of the present invention. The shape and/or size and/or location and/or orientation of the various components and/or the succession of the various steps can be changed. The functions of an element or module can be carried out by two or more components or modules, and vice versa. Components shown directly connected to or contacting each other can have intermediate structures arranged in between them. Steps shown directly following each other can have intermediate steps carried out between them. The details shown in a figure and/or described with reference to a figure or an embodiment can apply in another figures or embodiment. Not all of the details shown in a figure or described in the same context must necessarily be present in a same embodiment. Features or aspects that turn out to be innovative with respect to the prior art, alone or in combination with other features, should be deemed to be described *per se,* irrespectively of what is explicitly described as innovative.

## Claims

1. A spent and/or decommissioned lead-acid accumulator treatment plant (80; 200; 300), comprising:
a grinder device (14; 312) configured to receive a plurality of spent and/or decommissioned lead-acid accumulators (12; 202; 302) and to output a ground heterogeneous material (16; 314),
a plurality of separator devices (18; 82, 86; 316, 322, 338, 348, 376, 388, 418, 430, 450, 466), each separator device (18; 82, 86; 316, 322, 338, 348, 376, 388, 418, 430, 450, 466) being configured to receive a respective input heterogeneous material and to extract therefrom at least two respective output fractions (20, 22; 84, 94; 366, 448, 454), each output fraction (20, 22; 84, 94; 366, 448, 454) being homogeneous or less heterogeneous than the input heterogeneous material, wherein said input heterogeneous material is said ground heterogeneous material (16; 314) or is one of the output fractions (20, 22; 84, 92, 94; 366, 448, 454) of another one of said separator devices (18; 82, 86; 316, 322, 338, 348, 376, 388, 418, 430, 450, 466),
wherein a first one (82; 348) of said separator devices (18; 82, 86; 316, 322, 338, 348, 376, 388, 418, 430, 450, 466) is configured to extract pastel (84; 366) as one of said respective output fractions (20, 22; 84, 92, 94; 366, 448, 454),
wherein a second one (86) of said separator devices (18; 82, 86; 316, 322, 338, 348, 376, 388, 418, 430, 450, 466) is arranged upstream of said first one (82; 348) of said separator devices (18; 82, 86; 316, 322, 338, 348, 376, 388, 418, 430, 450, 466) and comprises a settler (88; 444) and an elutriator (90; 450) configured to be inputted the output fraction (20, 22; 92; 448) settled in the settler (88; 444) and to extract therefrom a lead-based metal fraction (20, 22; 94; 454) as one of said output fractions (20, 22; 84, 92, 94; 366, 448, 454) of said second one (86) of said separator devices (18; 82, 86; 316, 322, 338, 348, 376, 388, 418, 430, 450, 466).

2. The plant (80; 200; 300) according to claim 1, wherein the lead-based metal fraction (20, 22; 94; 454) is derived from contact components of the lead-acid accumulators.

3. The plant (80; 200; 300) according to claim 1 or 2, wherein the particle size of the lead-based metal fraction (20, 22; 94; 454) is smaller than or equal to a lower preset threshold.

4. The plant (80; 200; 300) according to claim 3, wherein the lower preset threshold is comprised between 0.5 and 4 mm, preferably between 1 and 3 mm, even more preferably is 2 mm.

5. The plant (80; 200; 300) according to any of the previous claims, wherein a third one (418) of said plurality of separator devices (18; 82, 86; 316, 322, 338, 348, 376, 388, 418, 430, 450, 466) is configured to extract, as one of said respective output fractions, a second lead-based metal fraction (422), wherein particles of the second lead-based metal fraction (422) have a size larger than a particle size of said lead-based metal fraction (20, 22; 94; 454).

6. The plant (80; 200; 300) according to claim 5, wherein said third one (418) of said plurality of separator devices (18; 82, 86; 316, 322, 338, 348, 376, 388, 418, 430, 450, 466) is arranged upstream of said second one (86) of said separator devices (18; 82, 86; 316, 322, 338, 348, 376, 388, 418, 430, 450, 466).

7. The plant (80; 200; 300) according to claim 5 or 6, wherein the particle size of the second lead-based metal fraction (422) is larger than an upper preset threshold, larger than a or respectively the lower preset threshold of the particle size of said lead-based metal fraction (20, 22; 94; 454).

8. The plant (80; 200; 300) according to claim 7, wherein a fourth one (388) of said plurality of separator devices (18; 82, 86; 316, 322, 338, 348, 376, 388, 418, 430, 450, 466) is configured to extract, as one of said respective output fractions, a third lead-based metal fraction (410), wherein particles of the third lead-based metal fraction (410) have a size comprised between the lower preset threshold and the upper preset threshold.

9. The plant (80; 200; 300) according to claim 8, wherein said fourth one (388) of said plurality of separator devices (18; 82, 86; 316, 322, 338, 348, 376, 388, 418, 430, 450, 466) is arranged upstream of said second one (86) of said separator devices (18; 82, 86; 316, 322, 338, 348, 376, 388, 418, 430, 450, 466).

10. A process for treating spent and/or decommissioned lead-acid accumulators, comprising:
grinding a plurality of spent and/or decommissioned lead-acid accumulators, to output a ground heterogeneous material,
separating said ground heterogeneous material into a plurality of output fractions, each output fraction being homogeneous or less heterogeneous than the ground heterogeneous material,
wherein said separating comprises:
separating pastel,
letting one of said output fractions less heterogeneous than the input heterogeneous material settle, and
elutriating the settled material to separate therefrom a lead-based metal fraction.
